# DEMANDE DE BREVET EUROPEEN

(11) **EP 2 389 796 A1**
(43) Date de publication de la demande: **30.11.2011**
(21) Numéro de dépôt: 11168024.5
(22) Date de dépôt: 30.05.2011
(51) Int. Cl.: A01D 33/06, A01B 33/12

(54) **Machine de travail du sol avec un carter étanche**

(30) Priorité: 31.05.2010 FR 1054208
(71) Demandeur: KUHN S.A., 67700 Saverne (FR)
(72) Inventeur: Teitgen, Hervé, 57370 PHALSBOURG (FR); Potier, Philippe, 57370 VECKERSVILLER (FR)

(57) **Abrégé**

La présente invention concerne une machine de travail du sol (1) comportant un carter (2, 2A), transversal à la direction d'avance (F) durant le travail, supportant des outils de travail (3) montés radialement sur des rotors (4) susceptibles de tourner autour d'un axe respectif sensiblement vertical (5), ledit carter (2, 2A) présentant une poutre (7, 7A), un couvercle (8) assemblés à l'aide de moyens de fixation (9) et un moyen d'étanchéité (13) pour assurer l'étanchéité du carter (2, 2A).

La machine de travail du sol est remarquable en ce qu'une gorge (14, 14A) et/ou une rainure longitudinale (16), apte à recevoir ledit moyen d'étanchéité (13), s'étend(ent) entre au moins un des flancs (11, 11A) et/ou sur la face supérieure d'une plaque (15) et les perçages destinés à recevoir ledit moyen d'étanchéité (13).

## Description

La présente invention se rapporte au domaine technique général du machinisme agricole et notamment aux machines agricoles destinées à travailler le sol. L'invention concerne une machine de travail du sol comportant un carter, transversal à la direction d'avance durant le travail, supportant des outils de travail montés radialement sur des rotors susceptibles de tourner autour d'un axe respectif sensiblement vertical, ledit carter présentant une poutre et un couvercle assemblés à l'aide de moyens de fixation et un moyen d'étanchéité s'étendant entre la poutre et le couvercle.

Une telle machine de travail du sol est décrite dans le document FR 2 335 141. Cette machine agricole comporte un carter dans lequel sont logés des organes d'entraînement. Ces derniers animent des rotors autour d'un axe sensiblement vertical, chaque rotor étant équipé d'outils de travail. Le carter contient du lubrifiant en vue d'assurer le graissage des organes d'entraînement. Le carter doit donc être étanche afin d'éviter des pertes de lubrifiant et la pénétration d'eau et de poussière. Le carter comporte une poutre sur laquelle est fixé un couvercle renfermant les organes d'entraînement. Un joint d'étanchéité destiné à assurer l'étanchéité du carter est prévu entre la poutre et le couvercle. Il s'agit d'un joint torique de section circulaire pouvant supporter de nombreux démontage et remontage du couvercle sans perdre ses qualités. Le joint est maintenu en place au moyen d'une gouttière à profil triangulaire. La position de la gouttière sur le flanc interne est primordiale pour une bonne étanchéité. Cette gouttière est obtenue par soudure d'une bande de tôle recourbée vers l'intérieur sur les flancs internes et sur les plaques d'extrémité de la poutre.

Pour que les flancs et les plaques d'extrémité ne soient pas déformés au cours de la soudure et pour des raisons économiques, la gouttière est soudée par points. Une telle soudure par points n'assure pas une rigidité constante tout le long de la gouttière puisqu'elle peut fléchir entre deux points de soudure. Si les points de soudure sont trop espacés, ils conduisent à une flexion de la gouttière trop importante et la compression suffisante du joint n'est plus assurée. Les gouttières permettent de guider le joint d'étanchéité le long des flancs internes et le long des plaques d'extrémité.

Par contre, le joint n'est pas guidé en continu dans les zones de jonction entre les flancs et les plaques d'extrémité du fait du changement de direction du joint. Dans ces zones, le joint n'est ni maintenu, ni guidé. Il ne peut donc pas être écrasé de façon appropriée pour assurer l'étanchéité dans les coins. Par ailleurs, le joint présente des entailles pour faciliter la déformation de ce dernier dans les coins du carter. Ces entailles affaiblissent la capacité d'étanchéité du joint.

Le document EP 0 264 994 se rapporte à un carter avec une poutre et un couvercle pour une herse rotative. Un joint, disposé entre la poutre et le couvercle, assure l'étanchéité du carter. Le logement du joint est obtenu grâce à des entretoises intercalées entre la poutre et le couvercle. Ainsi, le couvercle n'est pas plaqué directement sur les rebords de la poutre. Ces entretoises permettent de contrôler l'écrasement du joint. Afin de permettre un guidage du joint, un grand nombre d'entretoises est inséré entre le couvercle et la poutre sur la périphérie du carter. Le joint est écrasé par serrage des boulons pour plaquer le couvercle sur l'entretoise et sur la poutre. On remarque que le joint s'étend à l'extérieur des perçages destinés à recevoir un boulon respectif et qu'ainsi pour assurer une bonne étanchéité du carter il est nécessaire d'assurer également l'étanchéité au niveau des nombreux boulons. D'autre part, le joint n'est guidé qu'au niveau des entretoises qui sont maintenues par les boulons. Ainsi, l'étanchéité du carter n'est pas assurée en continu sur toute la périphérie du carter.

La présente invention a pour but de remédier aux inconvénients précités. Elle doit notamment proposer un carter pour lequel le moyen d'étanchéité est disposé avec précision sur la poutre.

A cet effet, une importante caractéristique de l'invention consiste en ce qu'une gorge longitudinale apte à recevoir le moyen d'étanchéité s'étend entre au moins un des flancs de la poutre et les perçages destinés à recevoir le moyen de fixation respectif. Grâce à cette caractéristique, le moyen d'étanchéité est guidé sur toute la longueur de la poutre. Le moyen d'étanchéité est ainsi comprimé de façon optimale pour assurer l'étanchéité entre la poutre et le couvercle.

Selon une autre caractéristique de l'invention, le carter présente une rainure apte à recevoir le moyen d'étanchéité, la rainure est ménagée dans la face supérieure de chaque plaque. Le moyen d'étanchéité est ainsi guidé sur toute la longueur de la rainure et la profondeur de cette rainure par rapport à la face supérieure est adaptée aux dimensions du moyen d'étanchéité. L'étanchéité au niveau des extrémités latérales du carter est améliorée puisque le moyen d'étanchéité peut être comprimé de façon optimale entre les plaques et le couvercle.

Selon une autre caractéristique de l'invention, chaque extrémité de la rainure présente un coude. De ce fait, le moyen d'étanchéité est guidé dans les angles du carter.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente, en vue de côté, une machine agricole de travail du sol selon la présente invention,
- la **figure 2** représente en perspective une partie de la poutre de la machine agricole,
- la **figure 3** représente à plus grande échelle, une vue de dessus d'une partie de la poutre,
- la **figure 4** représente une vue en coupe selon l'axe IV-IV de la figure 3,
- la **figure 5** représente une vue en coupe selon l'axe V-V de la figure 3,
- la **figure 6** représente une vue en coupe d'un carter selon un autre exemple de réalisation,
- la figure 7 représente en perspective et vu de dessous, une partie du carter de la figure 6.

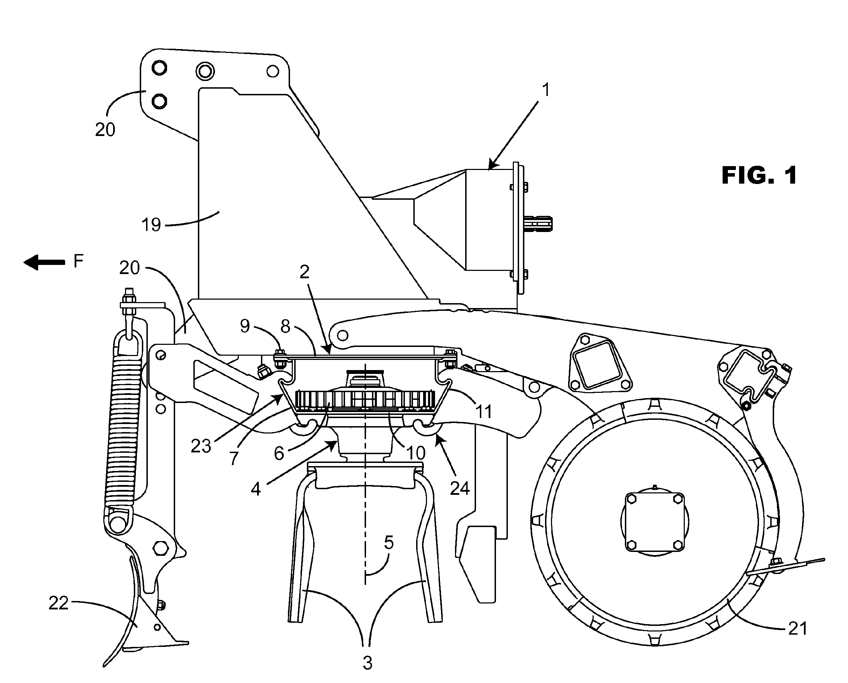

Telle qu'elle est représentée sur la figure 1, la machine agricole de travail du sol (1) selon l'invention comporte un carter (2) s'étendant transversalement à la direction d'avance (F) pour le travail. Le carter (2) supporte des outils de travail (3) qui sont montés radialement sur des rotors (4) susceptibles de tourner autour d'un axe respectif sensiblement vertical (5). Les outils de travail (3) sont constitués d'une partie de travail et d'une partie de liaison. La partie de travail et la partie de liaison s'étendent, de préférence, selon des directions sensiblement perpendiculaires de manière à réaliser une forme globale coudée.

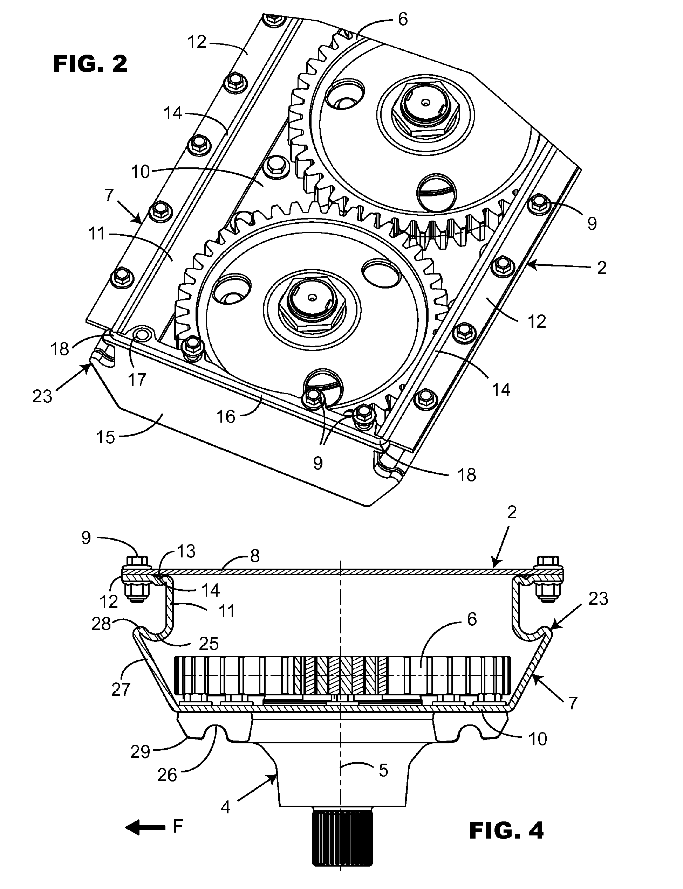

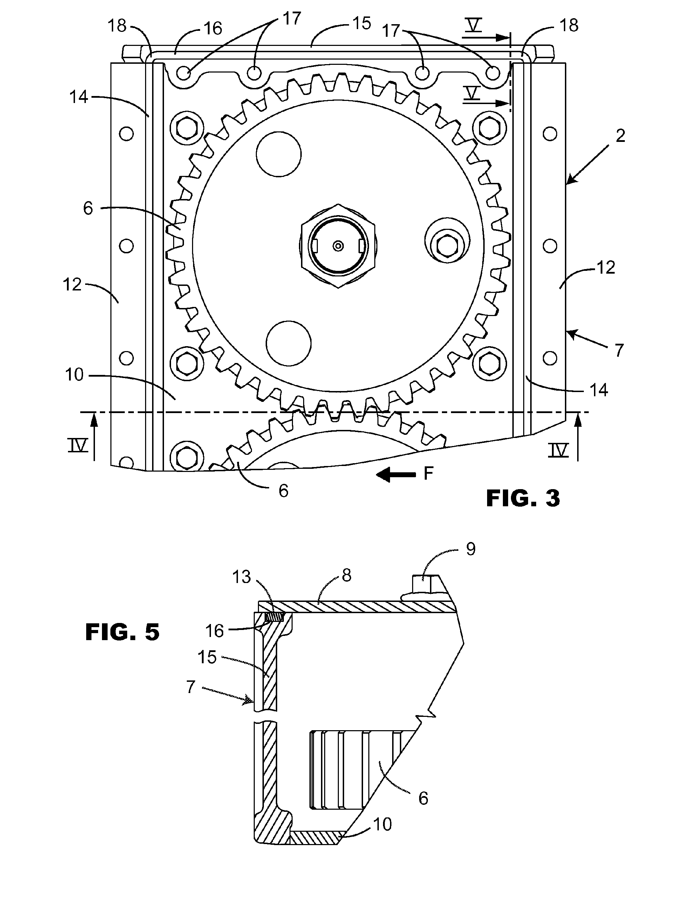

Dans le carter (2), représenté aux figures 2 et 3, sont agencés des organes d'entraînement (6) qui ont pour fonction de transmettre un mouvement de rotation par exemple d'une prise de force d'un tracteur (non représenté) vers les rotors (4) orientés chacun selon un axe respectif sensiblement vertical (5) durant le travail. Le carter (2) présente une poutre (7) et un couvercle (8) assemblés à l'aide de moyens de fixation (9) tels que des boulons. Pour une meilleure compréhension, le couvercle (8) et le moyen d'étanchéité (13) ne sont pas représentés sur ces figures. Le profil de la poutre (7) comporte une base (10), un flanc (11) de part et d'autre de la base (10) et des rebords (12), chaque flanc (11) se terminant par un rebord (12). La base (10) et les rebords (12) s'étendent sensiblement horizontalement et les flancs (11) s'étendent globalement verticalement, ils s'étendent entre la base (10) et les rebords (12). Les rebords (12) sont destinés à recevoir et supporter le couvercle (8). Chaque rebord (12) présente des perçages destinés à recevoir un moyen de fixation (9) respectif. Le couvercle (8) est pressé sur les rebords (12) par le serrage des moyens de fixation (9). Le carter (2) contient du lubrifiant en vue d'assurer le graissage des organes d'entraînement (6), il doit être étanche afin d'éviter des pertes de lubrifiant et la pénétration d'eau et de poussière. Pour assurer l'étanchéité statique du carter (2), un moyen d'étanchéité (13) est interposé entre la poutre (7) et le couvercle (8) sur tout le pourtour du carter (2). La poutre (7) est fermée à chacune de ses extrémités par une plaque respective (15). Chaque plaque (15) est soudée sur la base (10) et les flancs (11) de la poutre (7).

Selon une importante caractéristique de l'invention, une gorge (14) apte à recevoir le moyen d'étanchéité (13) s'étend, vu de côté, entre au moins un des flancs (11) de la poutre (7) et les perçages destinés à recevoir le moyen de fixation (9) respectif. La gorge (14) est un évidement pratiqué dans le carter (2) pour pouvoir y loger le moyen d'étanchéité (13). Grâce à cette gorge (14), le moyen d'étanchéité (13) est placé entre le rebord (12) de la poutre (7) et le couvercle (8) de manière à être comprimé. Le moyen d'étanchéité (13) peut ainsi être déformé de manière uniforme sur toute la longueur de la gorge (14) correspondant à la longueur de la poutre (7). Pour assurer une étanchéité parfaite, la profondeur de la gorge (14) est adaptée aux dimensions du moyen d'étanchéité (13) et notamment à son diamètre au repos. La profondeur de la gorge (14) est, de préférence, inférieure au diamètre non comprimé du moyen d'étanchéité (13). La gorge (14) permet aussi de guider la position horizontale du moyen d'étanchéité (13) dans les deux directions, vu de côté. La gorge (14) réalise donc un guidage horizontal bidirectionnel. La gorge (14) assure le guidage du moyen d'étanchéité (13) sur au moins toute sa longueur dans les deux directions horizontales de l'axe horizontal inclut dans la section IV-IV de la figure 3. Cet axe horizontal est parallèle à la direction d'avance (A). L'utilisation d'une telle gorge (14) permet l'utilisation d'un moyen d'étanchéité (13) souple, ce qui facilite aussi son montage.

Dans l'exemple de réalisation représenté sur les figures 2 à 5, la gorge (14) est ménagée dans la poutre (7) alors que dans l'autre exemple de réalisation, la gorge (14) est ménagée dans le couvercle (8). Dans les deux cas, le moyen d'étanchéité (13) s'étend entre le couvercle (8) et le rebord (12) de la poutre. Sa position est telle que la gorge (14) et donc le moyen d'étanchéité (13) s'étendent à l'extérieur du flanc (11) de la poutre (7).

D'après les figures 2 et 3, une gorge longitudinale est ménagée dans chaque rebord (12) de la poutre (7). Elle est sensiblement parallèle au rebord (12) et s'étend sur toute la longueur de la poutre (7). Le moyen d'étanchéité (13) est ainsi guidé sur toute la longueur de la gorge longitudinale.

La figure 4 est une vue en coupe du carter (2) sur laquelle le couvercle (8) et le moyen d'étanchéité (13) sont représentés. On remarque que la gorge (14) s'étend sur le rebord (12) sensiblement horizontal, à l'extérieur du flanc (11) qui s'étend sensiblement verticalement. La gorge (14) s'étend au voisinage de l'arête entre le rebord (12) et le flanc (11). Cette gorge (14) s'étend vers le bas de manière à ce que le couvercle (8) puisse s'appuyer sur les rebords (12) et que le moyen d'étanchéité (13) puisse être comprimé pour assurer une étanchéité statique entre les rebords (12) et le couvercle (8). Le moyen d'étanchéité (13) est représenté à la figure 4, dans sa position comprimée. La gorge (14) présente avantageusement une forme arrondie. Une autre forme apte à recevoir un moyen d'étanchéité pourrait aussi convenir.

Le moyen d'étanchéité (13) est par exemple un joint torique dont la forme de la section est circulaire à l'état de repos ou non monté. Un tel joint peut subir une déformation importante. Il supporte de nombreux démontages et remontages du couvercle sans perdre ses qualités. Dans ce cas, la profondeur de la gorge (14) est inférieure au diamètre extérieur de la section circulaire du joint torique.

D'une manière avantageuse, le profil de la poutre (7) intègre la gorge (14) créant un logement pour le moyen d'étanchéité (13). La gorge (14) est notamment mise en oeuvre dans une opération de profilage à froid. Le profilage à froid est un processus de mise en forme en continu qui permet, à partir de tôles planes en feuilles ou en bobine, d'obtenir des produits de section constante. Le feuillard subit des déformations progressives jusqu'à obtenir les angles et la forme souhaités. Grâce au profilage à froid, la forme est obtenue sans que soit modifiée son épaisseur initiale. Une telle gorge (14) profilée dans la tôle est solide et indéformable, elle assure donc un guidage optimal et un parfait contrôle de l'écrasement du moyen d'étanchéité (13). Il n'y a pas de déformation de la gorge sous l'effet de la compression du moyen d'étanchéité (13).

Avec un tel procédé, le contrôle de la profondeur de la gorge (14) est assuré avec précision. Une gorge (14) de profondeur réduite peut être obtenue. Elle a avantageusement une forme arrondie. Cette précision permet aussi de réduire sensiblement la section du moyen d'étanchéité (13) et de réduire la largeur de la poutre dans sa partie supérieure. L'obtention d'une telle gorge n'est techniquement pas possible par pliage.

Selon une autre importante caractéristique de l'invention, une rainure longitudinale (16) apte à recevoir le moyen d'étanchéité (13) est ménagée dans la face supérieure de chaque plaque (15). Grâce à cette rainure (16) dans la face supérieure, le moyen d'étanchéité (13) est guidé sur toute la longueur de la rainure (16) dans les deux directions horizontales de l'axe horizontal inclut dans la section IV-IV de la figure 3. Par ailleurs la profondeur de la rainure (16) est adaptée aux dimensions du moyen d'étanchéité (13). De cette manière, l'étanchéité du carter (2) au niveau de ses extrémités latérales est améliorée. La rainure (16) s'étend longitudinalement sur la face supérieure de la plaque (15). Le moyen d'étanchéité (13) est donc guidé sur toute la longueur de la plaque (15).

La plaque (15) est une pièce de forme, elle est obtenue par moulage ou forgeage et usinage. La rainure (16) présente une forme permettant d'y loger le moyen d'étanchéité (13) et sa profondeur est inférieure au diamètre non monté du moyen d'étanchéité (13). Cette rainure (16) réalisée dans la plaque (15) n'est pas déformable. Le guidage du moyen d'étanchéité (13) est donc idéal et par conséquent l'écrasement du moyen d'étanchéité (13) entre la plaque (15) et le couvercle (8) est constant. Dans l'exemple de réalisation de la figure 5, la rainure (16) présente une section rectangulaire mais cette section peut avoir une forme différente par exemple arrondie ou triangulaire.

D'une manière avantageuse, chaque plaque (15) est pourvue d'au moins un logement (17) destiné à recevoir un moyen de fixation (9). Le couvercle (8) peut ainsi être assemblé et serré sur les plaques (15) pour comprimer le moyen d'étanchéité (13) et améliorer son efficacité. Le logement (17) présente un trou taraudé ayant la fonction d'écrou. Le logement (17) s'étend sur la paroi interne de la plaque (15). Dans l'exemple représenté, la plaque (15) présente quatre logements (17).

Pour une bonne étanchéité du carter (2), le moyen d'étanchéité (13) est interposé entre le couvercle (8) et la poutre (7) avec les plaques (15) sur toute la périphérie du carter (2). La figure 3 représente une vue de dessus du carter (2) sans le couvercle (8). En vue de dessus, le carter (2) a une forme sensiblement rectangulaire. Le moyen d'étanchéité (13) présente donc également une forme sensiblement rectangulaire lorsqu'il est monté sur la poutre (7). Les grands côtés du moyen d'étanchéité (13) sont guidés par les gorges (14) et les petits côtés sont guidés par les rainures (16). Les rainures (16) s'étendent donc sensiblement perpendiculairement aux gorges (14).

Selon une caractéristique importante de l'invention, chaque extrémité de la rainure (16) présente un coude (18). Ces coudes (18) avec une courbure en arc de cercle permettent notamment de guider le moyen d'étanchéité (13) dans les angles du carter (2). L'étanchéité est ainsi améliorée dans ces zones sensibles du carter (2) puisque le coude (18) guide le moyen d'étanchéité (13) dans les angles.

A la lumière de la figure 3, la rainure (16) est globalement longitudinale et ses extrémités sont orientées sensiblement perpendiculairement de manière à former le coude (18). La profondeur du coude (18) est sensiblement égale à la profondeur de la rainure (16). Le coude (18) s'étend avantageusement dans le prolongement de la gorge (14) de manière à guider le moyen d'étanchéité (13) de façon continue dans les angles. La profondeur de la gorge (14) est sensiblement égale à la profondeur du coude (18).

Grâce à la rigidité de chaque gorge (14) et de chaque rainure (16) et à leur profondeur adaptée, le guidage respectif ainsi que la compression du moyen d'étanchéité (13) est constante pour que l'étanchéité du carter (2) soit bien améliorée. Une étanchéité parfaite est obtenue grâce à la continuité du guidage du moyen d'étanchéité (13) assurée par les gorges (14), les coudes et les rainures (16). De plus, le moyen d'étanchéité n'est pas fragilisé car il n'a pas besoin d'être entaillé.

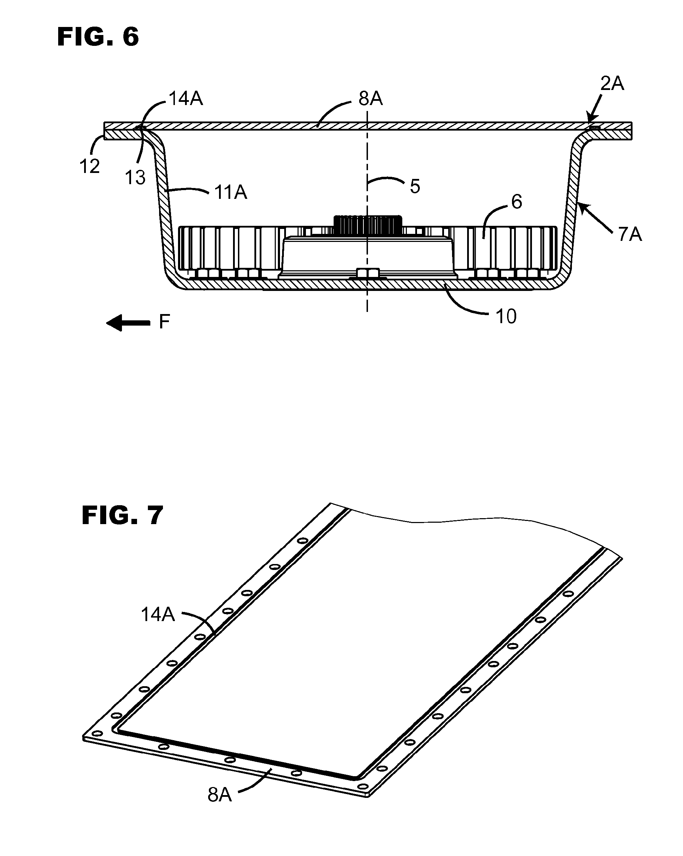

Les figures 6 et 7 représentent un carter selon un autre exemple de réalisation de l'invention. Ce carter (2A) présente une gorge (14A) selon l'invention apte à recevoir le moyen d'étanchéité (13) qui s'étend entre au moins un des flancs (11A) de la poutre (7A) et les perçages destinés à recevoir le moyen de fixation (9) respectif. Le carter (2A) présente quelques différences par rapport au carter (2) représenté sur les figures 1 à 5 qui sont exposées ci-après. On remarque que la gorge (14A) est réalisée dans le couvercle (8A) et plus particulièrement dans sa face interne. Etant donné que la gorge (14A) s'étend dans le couvercle (8A), les rebords (12A) présentent une surface d'appui plane sensiblement horizontale. Le couvercle (8A) recouvre la poutre (7A) ainsi que les plaques (15) disposées à chacune de ses extrémités. Ainsi, les plaques d'extrémité (15) ne présentent pas de rainure (16) ni de coude (18). La face supérieure réalisant la surface d'appui de chaque plaque (15) est plane. La surface d'appui, correspondant à la surface d'écrasement du moyen d'étanchéité (13) sur la poutre (7A) au niveau du plan de joint, est plane. La poutre (7A) comporte des flancs droits (11A) orientés sensiblement verticalement.

Le couvercle (8A) étant réalisé d'une seule pièce, la gorge (14A) est continue. Elle est réalisée directement à côté des perçages destinés à recevoir les moyens de fixation (9). La gorge (14A) suit le pourtour du couvercle (8A). Elle est réalisée dans une partie de l'épaisseur du couvercle (8A). Il s'agit d'un évidement destiné à recevoir et guider de manière précise le moyen d'étanchéité (13). Sur la figure 6, le moyen d'étanchéité (13) est représenté dans sa position comprimée. Afin de mieux voir la gorge (14A) sur la figure 7, le moyen d'étanchéité (13) n'est pas représenté.

La machine (1) représentée est une herse rotative destinée à la préparation de lit de semences. Afin de pouvoir être déplacée, la machine comporte un cadre (19) pourvu d'un dispositif d'attelage trois points (20) à un tracteur. A l'arrière de la machine (1) est prévu un rouleau (21) pour le contrôle de la profondeur de travail des outils. Le rouleau (21) a aussi pour fonction de rappuyer le sol et de compléter l'émiettement. Le rouleau (21) est relié au cadre (19) au moyen de bras. La herse rotative est munie à l'avant du carter (2) d'un équipement tel que des effaceurs de traces (22). Un effaceur de traces (22) a pour fonction d'ameublir le sol dans le sillage de la roue du tracteur (non représenté). La position latérale de l'effaceur de traces (22) peut être adaptée. L'effaceur de traces (22) est monté de façon réglable sur une glissière longitudinale (23) par l'intermédiaire d'un dispositif de fixation (24). La glissière longitudinale (23) s'étend sur le flanc (11) de la poutre (7). La glissière longitudinale (23) présente au moins une rainure (25, 26), une portion inclinée (27) par rapport à la verticale et au moins un pli (28, 29).

D'une manière avantageuse, la gorge (14) est obtenue dans la même opération de profilage à froid que la glissière longitudinale (23).

La machine agricole conforme à l'invention peut être une machine rigide ou une machine repliable en au moins deux parties.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine de travail du sol (1) comportant un carter (2, 2A), transversal à la direction d'avance (F) durant le travail, supportant des outils de travail (3) montés radialement sur des rotors (4) susceptibles de tourner autour d'un axe respectif sensiblement vertical (5), ledit carter (2, 2A) présentant une poutre (7, 7A), un couvercle (8, 8A) assemblés à l'aide de moyens de fixation (9) et un moyen d'étanchéité (13) pour assurer l'étanchéité du carter (2, 2A), ***caractérisée en ce qu***'une gorge (14, 14A) apte à recevoir ledit moyen d'étanchéité (13) s'étend entre au moins un des flancs (11, 11A) de ladite poutre (7, 7A) et les perçages destinés à recevoir ledit moyen de fixation (9) respectif.

2. Machine de travail du sol selon la revendication 1, ***caractérisée en ce que*** ladite gorge (14, 14A) présente une forme arrondie.

3. Machine de travail du sol selon la revendication 1 ou 2, ***caractérisée en ce que*** le profil de ladite poutre (7) intègre ladite gorge (14).

4. Machine de travail du sol selon l'une quelconque des revendications 1 à 3, ***caractérisée en ce* que** ladite gorge (14) est mise en oeuvre par une opération de profilage à froid.

5. Machine de travail du sol (1) comportant un carter (2), transversal à la direction d'avance (F) durant le travail, supportant des outils de travail (3) montés radialement sur des rotors (4) susceptibles de tourner autour d'un axe respectif sensiblement vertical (5), ledit carter (2) présentant une poutre (7), un couvercle (8) assemblés à l'aide de moyens de fixation (9) et un moyen d'étanchéité (13) pour assurer l'étanchéité du carter (2), ladite poutre (7) présente à chaque extrémité une plaque (15), ***caractérisée en ce qu*'**une rainure longitudinale (16) apte à recevoir ledit moyen d'étanchéité (13) est ménagée dans la face supérieure de chaque plaque (15).

6. Machine de travail du sol selon la revendication 5, ***caractérisée en ce que*** ladite rainure (16) présente un coude (18) à ses extrémités.

7. Machine de travail du sol selon les revendications 1 et 6, ***caractérisée en ce que*** ledit coude (18) s'étend dans le prolongement de ladite gorge (14).

8. Machine de travail du sol selon l'une quelconque des revendications 5 à 7, ***caractérisée en ce que*** des moyens de fixation (9) s'étendent sur ladite paroi interne de ladite plaque (15).

9. Machine de travail du sol selon l'une quelconque des revendications 1 à 8, ***caractérisée en ce que*** la profondeur de ladite gorge (14) et/ou de ladite rainure (16) est adaptée aux dimensions dudit moyen d'étanchéité (13).

10. Machine de travail du sol selon l'une quelconque des revendications 1 à 9, ***caractérisée en ce que*** ledit moyen d'étanchéité (13) est formé d'une seule pièce.

11. Machine de travail du sol selon la revendication 1 ou 2, ***caractérisée en ce que*** ladite gorge (14A) est ménagée dans ledit couvercle (8A).

12. Machine de travail du sol selon la revendication 11, ***caractérisée en ce que*** ladite gorge (14A) est continue.

13. Machine de travail du sol selon la revendication 11 ou 12, ***caractérisée en ce que*** ladite poutre (7A) présente des surfaces d'appui planes.
